(19) Europäisches Patentamt / European Patent Office / Office européen des brevets

(11) **EP 2 775 139 B1**

(12) **EUROPEAN PATENT SPECIFICATION**

(45) Date of publication and mention
of the grant of the patent:
**31.01.2018 Bulletin 2018/05**

(51) Int Cl.:
***F03D 7/02*** *(2006.01)*

(21) Application number: **14158453.2**

(22) Date of filing: **07.03.2014**

(54) **Wind Turbine , and control method thereof**

Windturbine sowie Regelungsverfahren dafür

Éolienne et méthode de contrôle

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **08.03.2013 IT TO20130187**

(43) Date of publication of application:
**10.09.2014 Bulletin 2014/37**

(73) Proprietor: **Ge Avio S.r.l.**
**Rivalta di Torino (IT)**

(72) Inventors:
• **Cipriani, Marco**
**10135 Torino (IT)**
• **Ettorre, Stefano**
**70126 Bari (IT)**

(74) Representative: **Lovino, Paolo et al**
**Studio Torta S.p.A.**
**Via Viotti, 9**
**10121 Torino (IT)**

(56) References cited:
**EP-A1- 1 832 743     EP-A2- 2 067 989
EP-A2- 2 400 150     WO-A2-2010/130057
FR-A- 948 645     GB-A- 2 476 316
US-A- 4 183 717     US-A1- 2008 001 411**

**Description**

The present invention relates to an aerogenerator. In particular, the following description relates to an aerogenerator for generating electricity from wind energy, examples include FR 948 645 and US 4,183,717. Aerogenerators for generating electricity from wind energy generally consist of a turbine impeller connected to an electric generator.

The mechanical power P obtained from the wind in a turbine impeller is expressed by the following ratio:

$$P = \rho \ \pi R^2 \ Cp \ V^3 \ / \ 2$$

where $\rho$ is the air density, $\pi R^2$ is the surface swept by the impeller blades and V is the wind speed. The term Cp is named power coefficient and indicates the energy conversion efficiency (as ratio between extracted power and available wind power). In general, the power coefficient Cp is expressed as a function of a variable factor $\lambda$, named tip speed ratio, also indicated by the acronym TSR, and defined as the ratio between peripheral blade speed and wind speed:

$$\lambda = \omega \ R \ / \ V$$

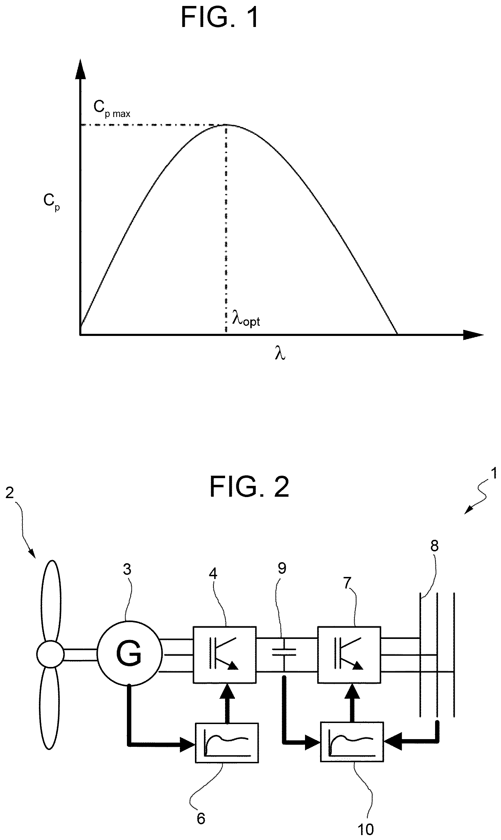

where $\omega$ and R are the angular speed and the radius of the impeller, respectively. Figure 1 is a chart which shows a typical curve of the power coefficient Cp as a function of the tip speed ratio $\lambda$. In variable blade pitch turbines, the power coefficient Cp is also a function of the pitch.

The ratio shown above, which binds the power P to the wind speed V, shows a cubic type proportionality. Thus, relatively small variations of speed V may translate into considerable variations of mechanical power P transmitted to the generator. Consequently, when the wind speed V exceeds a given threshold, the power transfer must be limited, and even taken to zero in case of an excessive speed V.

In the known solutions, such a limitation is obtained by using variable pitch blades which adapt their inclination to the wind speed. For example, EP2400150A2, which corresponds to the preamble of claim 1, describes a wind overspeed protection system with a sensor which measures the impeller speed and with a comparing block which compares the measured speed with a given threshold value. According to this comparison, an apparatus is activated which adjusts the inclination angle of each blade of the impeller thus substantially obtaining an aerodynamic braking.

This type of solutions is normally of the active type and has a complex system of controlled actuators so as to vary the pitch of each blade. It is instead preferable to have an aerogenerator which has at least one protection system alternative to pitch variation to limit power if the wind speed becomes excessively intense.

Furthermore, the need is felt to adjust the power transfer to the generator not only when the wind speed exceeds the safety threshold but also in running conditions, so as to optimize the operation of the aerogenerator.

It is the object of the present invention to make an aerogenerator, which allows to simply and cost-effectively solve the aforementioned problems.

According to the present invention an aerogenerator is provided, as defined in claim 1.

The present invention further relates to a control method for an aerogenerator as defined in claim 6.

The invention will now be described with reference to the accompanying drawings which illustrate a non-limitative embodiment thereof, in which:

- figure 1 is a chart related to the power coefficient of an aerogenerator;
- figure 2 is a diagram of a preferred embodiment of the aerogenerator according to the present invention;
- figure 3 is a perspective view which shows the main mechanical components of the aerogenerator in figure 1;
- figure 4 diagrammatically shows a component of figure 2;
- figures from 5 to 7 are charts related to the operation of the aerogenerator in figure 1; and
- figure 8 is a block chart related to a control method of the aerogenerator according to the present invention.

With reference to figure 2, reference numeral 1 indicates an aerogenerator (diagrammatically shown), in particular for transforming wind energy into electricity. However, the aerogenerator 1 could also be applied to other technological sectors in which an operating fluid other than wind is provided, but also with an uncertain speed behavior with regards to its relative speed with respect to the aerogenerator 1.

The aerogenerator 1 comprises a turbine 2, which transforms the energy of the operating fluid into mechanical rotation energy; a generator 3, which is of the permanent magnet type, is coaxial to the turbine 2 and transforms the mechanical rotation energy into electricity; and a static converter 4, which is electrically connected in input to the stator of the generator 3 and in output to a bus-DC 9 typically defined by a capacitor.

The converter 4 converts the electricity supplied by the stator from alternating current to direct current and adjusts the operation of the generator 3 in response to controls emitted by an electronic control unit 6, which, in turn, operates in response to signals related to the operation of the generator, as will be described better hereinafter.

The aerogenerator 1 further comprises a static converter 7, which is connected in output to an electric grid 8 and in input to the bus-DC 9, which thus performs an interface function between the converter 4 and the converter 7 and has the task of limiting the voltage ripples in order to control the electric power which is then output either to the grid or towards possible loads.

The converter 7 converts the electricity from direct current to alternating current and adjusts the conversion so as to adapt the voltage and the frequency of the electricity to those of the grid 8, in response to commands emitted by an electronic control unit 10, which in turn operates in response to electric magnitude measurements (voltage, frequency, phase, current etc.) at the bus-DC 9 and the grid 8.

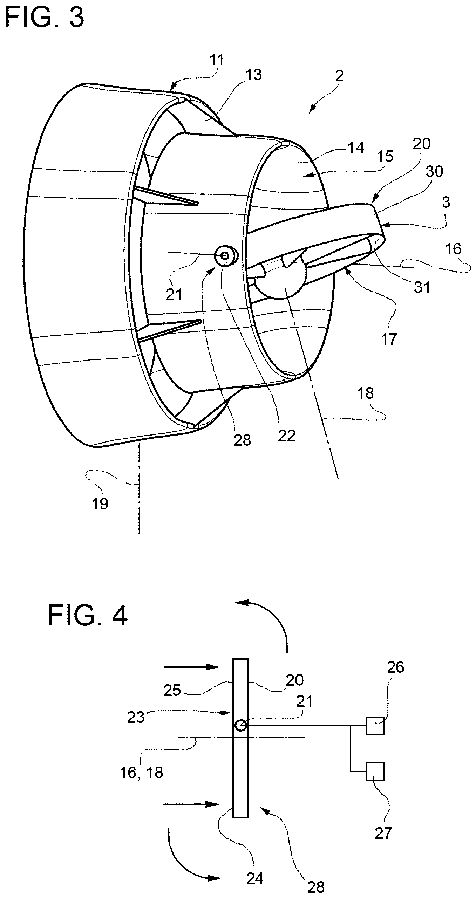

With reference to figure 3, the turbine 2 has a structure 11 which comprises a frame 13 and at least a wall 14, which is supported by the frame 13 (in manner not described in detail) and defines a pipe 15 adapted to guide an operating fluid flow along an axis 16. Preferably the walls 14 are shaped so as to define a diffuser. Other configurations are however possible: for example, the pipe 15 may be defined by a simple tube.

The turbine 2 further comprises an impeller 17, which is rotational about an axis 18. In normal operating conditions, as will also be described below, the axis 18 is parallel to the axis 16, and the impeller 17 is completely housed in the pipe 15 (in manner not shown).

In the specific case, the structure 11 may turn about a vertical axis 19 (in manner not shown) to adapt the aerogenerator 1 to the actual wind direction.

The structure 11 supports an assembly 20, which consists of the whole formed by the impeller 17 and the generator 3, and is coupled to the structure 11 so as to be able to rotate about an adjustment axis 21. As diagrammatically shown in figure 4, axis 21 is radially distanced from axis 18 and extends in tangential direction with respect to axis 18. In particular, the assembly 20 is coupled to the frame 13 by means of two hinge devices 22 (fig. 3), which are aligned along axis 21 and are arranged on opposite sides of the assembly 20.

The assembly 20 can pivot about axis 21 between an operating position, in which axis 18 is either parallel to or coinciding with axis 16 (fig. 4), and a safe position (fig. 3), which in axis 18 is transversal to axis 16, and thus to the wind direction. In particular, the operating and safe position are defined by angular stop abutments (not shown).

Again with reference to figure 4, the impeller 17 defines a circular front surface 23, which is orthogonal to axis 18, and on which the thrust of the wind operates. By virtue of its eccentric position, axis 21 defines an ideal cord which divides the surface 23 into a circular segment 24 having a greater area and a circular segment 25 having a smaller area. By virtue of the difference between such areas, the wind thrust is higher on the circular segment 24, so that it generates a rotation axis about axis 21 and tends to make the assembly 20 rotate automatically from the operating position to the safe position.

Preferably, the aerogenerator 1 comprises a contrast device 26, which exerts a contrast torque about axis 21 opposite to that of the operating fluid on the assembly 20 so as to maintain the assembly 20 in the operating position. The device 26 is calibrated so as to let the assembly 20 rotate towards the safe position only when the wind thrust exceeds a given threshold. Preferably, the device 26 exerts an elastic force and, in particular, comprises one or more torsion springs coaxial to the devices 22. Being of the elastic type, the contrast torque exerted by the device 26 increases as the rotation angle of the assembly 20 increases about axis 21. The arrangement of axis 21 over axis 18 is provided either alternatively to, or in combination with, an elastic type contrast torque, so as to have a contrast torque caused by the weight of the assembly 20 (assuming that the centre of gravity is approximately on axis 18).

Additionally, the aerogenerator 1 preferably comprises a damping device 27 (diagrammatically shown) which damps the oscillations about axis 21 consequent to sudden variations of operating fluid speed. In particular, the device 27 is defined by dampers of the passive type, e.g. by blocks made of polymeric material.

The device described above for letting the assembly 20 pivot towards the safe position defines a protection system 28, which automatically protects the generator 3 when the speed of the operating fluid exceeds the predetermined threshold. In particular, the protection system 28 is of the passive type, because it does not include the use of actuators or electronic control components, but is completely mechanical and intervenes directly and automatically in response to the wind thrust to "feather" the entire impeller 17.

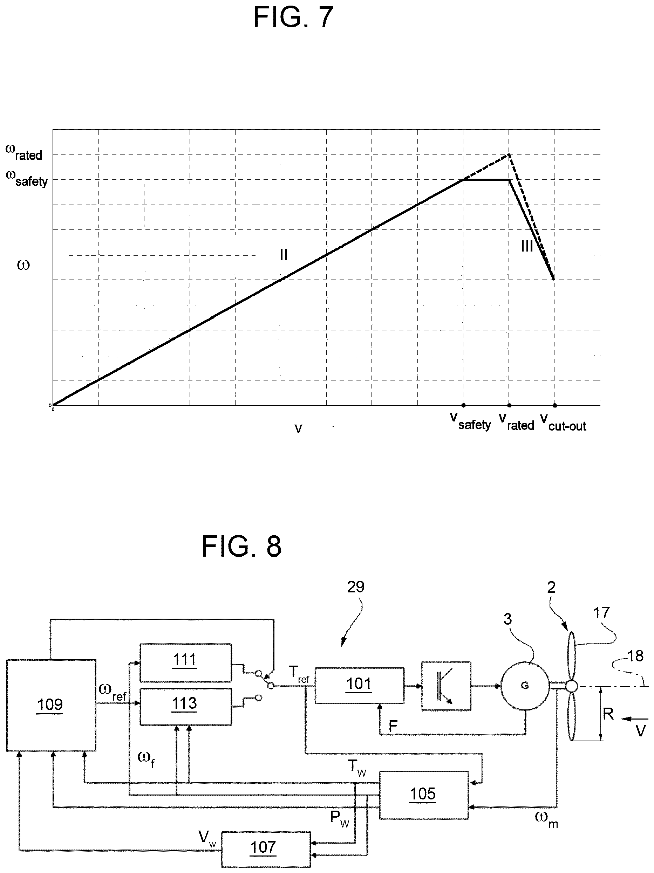

An active type control system 29 is provided alternatively or additionally to the protection system 28 (fig. 8). When the protection system 28 and the control system 29 are provided together, the protection system 28 has the advantage of intervening also in case of emergency, when the control system 29 either fails or is damaged. In other words, the protection system 28 guarantees a protection redundancy for the generator 3 and the converters 4, 7.

With reference to figure 3, the generator 3 is operated by the impeller 17, i.e. without the interposition of mechanical transmissions, i.e. is of the "direct-drive" type. Preferably, the generator 3 is embedded in the impeller 17, i.e. the components of the generator 3 are mounted directly on the structure of the impeller 16, without the possibility of separating the generator 3 from the rest of the aerogenerator 1.

Preferably, the generator 3 surrounds the impeller 17 and comprises a stator 30, defined by a ring arranged in radially outer position, and a rotor 31, defined by a ring which is arranged in radially inner position, is coupled to the stator 30 (in manner not shown in detail) in order to be able to rotate about axis 18 and is coupled to the radially outer ends of the blades of the impeller 17 so as to be driven in rotation together with the impeller 17. Preferably, the rotor 31 is fixed to the blades of the impeller 17 because no variation of the blade pitch is provided.

Preferably, the generator 3 is of the type indicated in the international patent applications published under numbers WO2009093181 and WO2009093183, the description of which is incorporated at least for the parts needed to understand and implement the present invention.

The control system 29 mentioned above implements a control logic, or algorithm, in one or more control units, so as to protect the generator 3 and the converters 4,7 from uncertain operating fluid flows with excessive speeds in automatic manner. In order to reach this effect, with reference to the block chart in figure 8, the control system 29 calculates a resistant torque or current set-point Tref, which is equivalent to the torque because it consists of proportional magnitudes at least in a linear field of operation of the electric machine. The set-point Tref defines a desired target and is calculated as a function of the actual operating conditions of the aerogenerator 1, i.e. as a function of the speed of the operating fluid, as will be explained in greater detail below, to then adjust the actual resistant torque applied by the generator 3 on the impeller 17.

In order to obtain this adjustment, the control system 29 comprises a block 101, which implements a feedback regulator, which operates so as to guarantee that the actual resistant torque and/or the current actually supplied by the generator 3 reaches the set-point Tref. This adjustment is carried out by the electronic control unit 6 in response to the set-point Tref and in response to inputs F which are indicative of phase current measurements of the stator 30 and of the position of the rotor 31 (the position of the rotor 31 could be obtained from an either estimated or measured value of the rotation speed of the impeller 17, such as for example the $\omega$m value described below, instead of being provided as information from the generator 3).

In particular, the regulator is a current regulator, conveniently of the proportional-integral type, which compares the target resistant torque or current (Tref) with that actually supplied (indicated by the inputs F) and which, on the basis of the result of the comparison, generates a reference, conveniently a voltage reference, for the converter 4, which is controlled by means of the driving signals of the electronic power switches (the converter 7 is not shown in the diagram in figure 8 for the sake of graphic simplicity).

The converter 4 will thus impart a driving voltage on some phases of the stator 30 in response to the reference provided by the regulator. The most suitable and most common driving method is Pulse Width Modulation.

The control on the generator 3 generates a variation of alternating electric current generated by the stator 30, and consequently a variation of the resistant torque exerted by the rotor 31, in order to reach the set-point Tref.

As shown above, in response to the torque/current control carried out by the regulator, the whole formed by the electronic control unit 6, the converter 4 and the generator 3 may be seen as a resistant torque regulator, which establishes a torque equal to the required set-point Tref instant by instant.

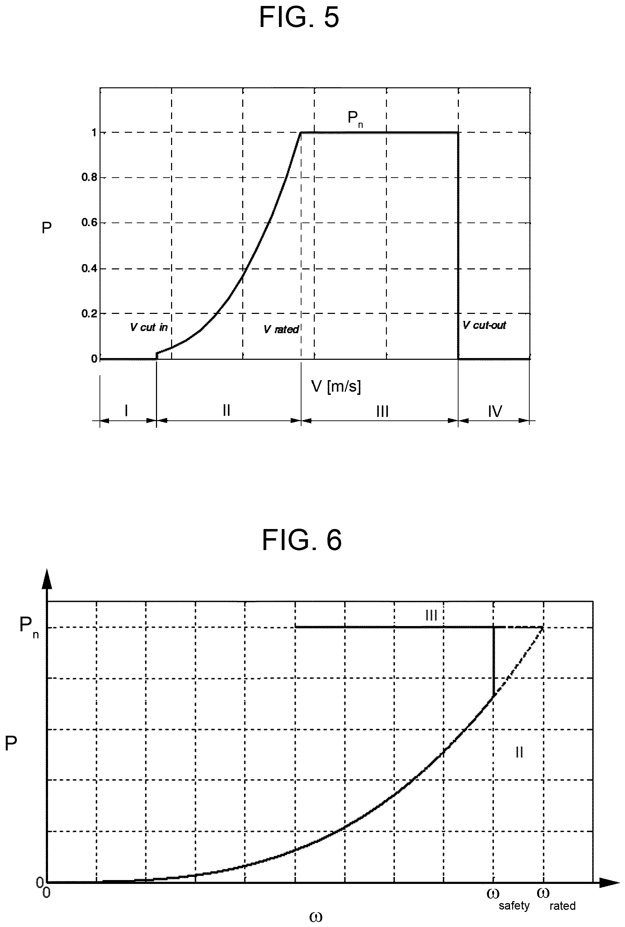

As mentioned above, the set-point Tref is calculated as a function of the speed V of the operating fluid (i.e. of the wind). The chart in figure 5 shows the operating map of the aerogenerator 1 having four different operating regions:

- Region I (V ≤ Vcut-in) : the speed V, when lower than a Vcut-in threshold value, is too low to benefit energy conversion; in this case, the rotation of the impeller 17 and of the rotor 31 is mechanically locked by a releasable stop device (not shown);
- Region II (Vcut-in ≤ V ≤ Vrated): when the speed V is greater than the Vcut-in threshold value and is lower than the Vrated nominal value, electricity is produced with the objective of maximizing the transfer of power P from the operating fluid to the generator 3; the power P is given by the following ratio:

$$P = \rho \, \pi R^2 \, Cp \, V^3 \, / \, 2$$

where $\rho$ is the density of the operating fluid, $\pi R^2$ is the surface swept by the impeller blades, and Cp is the so-called power coefficient; the features of the algorithm are such to make the power coefficient Cp maximum in this operating region;
- Region III (Vrated ≤ V ≤ Vcut-out): when the speed V exceeds the Vrated nominal value, but remains under a Vcut-out maximum limit, the power P is maintained at a constant value, i.e. at a nominal power Pn, thus reducing the rotation speed $\omega$ of the impeller 17 as the speed increases V, so as to reduce the power coefficient Cp as a consequence;
- Region IV (V ≥ Vcut-out) : when the speed V exceeds the Vcut-out maximum limit, the power transfer is cancelled out by means of braking and/or stop devices of the releasable type (not shown), because the speed V would be such not to take the working point beyond the limits set by the generator 3 and by the converters 4 and 7.

Each of the aforesaid operating regions is associated to a specific management strategy. Not being characterized by power extraction, Regions I and IV are simply managed by means of mechanical braking and/or stopping devices and will not be described hereinafter.

In Regions II and III, instead, the operation of the aerogenerator 1 is managed by adjusting the resistant torque exerted by the generator 3 on the impeller 17, as shown above.

Since the dynamics of an electric machine are very fast, if compared with those of an aerodynamic system, the control of the generator 3 is treated as if possessing a "unitary gain", i.e. as if it were a system which instantaneously responds to the set command, and thus to variations of the set-point Tref.

According to a preferred aspect of the present invention, the set-point Tref is determined in Region II and III according to an estimate of the speed V, without the assistance of dedicated sensors (anemometers). Indeed, anemometers are generally unadvisable because of the poor reliability of the measurements and because they are subject to wear and maintenance.

With reference to figure 8, the control system 29 preferably comprises a block 105 which implements a state observer, which determines an estimated aerodynamic torque value Tw (i.e. the mechanical torque generated by the thrust of the operating fluid on the impeller) or an estimated aerodynamic power value Pw transmitted by the operating fluid to the impeller 17 (the two values are correlated by the ratio Pw = Tw $\omega$ in all cases). In particular, the numerical model of the state observer is based on the Luenberger observer.

The state observer outputs the values Tw, Pw and operates in response to an input defined by an indicative speed value $\omega$m of the impeller 17 ($\omega$m may be either a measured value or an estimated value), and in response to an input defined by the set-point Tref, which is indicative of the resistant torque 3 (assuming that the electric dynamics of the generator are much faster than those of the impeller) which contrasts the torque due to the impeller 17.

In this case, the $\omega$m value is defined by a value measured by means of encoder or resolver. In addition to outputting the Tw,Pw values, the state observer filters the $\omega$m value and outputs a filtered $\omega$f value, indicative of the rotation speed of the impeller 17.

Furthermore, the control system 29 comprises a block 107 which operates in reply to the only two inputs defined by the $\omega$f and Tw values and calculates an estimated value Vw of the speed of the operating fluid, without direct measurements by means of anemometer (the $\omega$f value could be replaced by another value indicative of the rotation speed of the impeller 17, e.g. $\omega$m).

Numerical models which exploit design data in order to estimate the operating fluid speed (the curve of the power coefficient Cp as a function of the tip speed ratio factor, such as the curve shown in figure 1) and the measured data (e.g. the angular speed of the impeller) may be used.

One of the most common methods in literature consists in determining a function which interpolates the power coefficient curve Cp and which may be derived; the aerodynamic torque is then estimated and the tip speed ratio $\lambda$ value is determined by means of the Newton-Raphson method; finally, the speed V is determined from the value of $\lambda$. However, this manner requires the existence of a curve which can be derived and which interpolates the curve of the power coefficient Cp, which is normally obtained by points by means of fluid-dynamic simulations or by experimentation, in sufficiently accurate manner.

This condition is not always satisfied. Thus, a different method, which will be described in detail below should be used.

Again with reference to figure 8, the control system further comprises a block 109 which has supervisor function and the task of identifying the operating region of the aerogenerator 1.

In particular, the block 109 operates in response to three inputs defined by the Tw, Pw and Vw values. More in detail, the Vw value is compared with the stored values related to the operating map speeds (Vcut-in, Vrated, Vcut-out) in block 109 and according to the result of the comparison, the region in which the aerogenerator 1 is operating is determined and/or a corresponding regulation block is enabled. As mentioned above, the regulation blocks for Regions I and IV are not shown. For Regions II and III, the control system 29 comprises respective adjustment blocks 111,113 which generate respective resistant torque or current setpoints which are alternatively supplied to block 101 to define the set-point Tref. In other words, if the operating point of the aerogenerator 1 is in Region III, block 109 selects block 113 so that block 101 can receive the set-point Tref determined by block 113. If the operating point is in Region II (except for a transition end part), block 109 selects block 111 so that block 101 can receive the set-point Tref determined by block 111.

For Region II, block 111 implements a maximum power point tracker corresponding to a condition in which the blades of the impeller 17 work at maximum efficiency, i.e. in a condition in which the rotation speed $\omega$ has a $\omega$opt value such to optimize the tip speed ratio $\lambda$ and the power coefficient Cp has a maximum value Cpmax (figure 1) for any speed of the operating fluid in Region II, i.e.:

$$\lambda = \lambda opt = \omega opt \ R \ / \ V$$

Block 111 works in response to the ωf value (or alternatively ωm) and calculates the set-point Tref as a function of the numeric values Cpmax and λopt (figure 1) defined by project data, which were defined by means of simulations or by experimentation on the turbine 2.

$$Tref = Pmax \ / \ \omega f = \rho \ \pi R^2 \ Cpmax \ V3 \ / \ (2 \ \omega f) =$$

$$= (\rho \ \pi R^5 \ / \ 2) \ (Cpmax \ / \ \lambda opt^3) \ \omega f^2$$

Consequently, a torque control only which will adjust the rotation speed ω to ωopt value is implemented in Region II.

With regards to region III, block 113 operates in response to inputs which are defined by the ωf values (alternatively ωm) and Tw and by a set-point ωref, which corresponds to the desired value for the rotation speed of the impeller 17 and is calculated and provided by block 109.

Preferably, block 113 also manages the operation transition from Region II to Region III, so as to avoid sudden variations of resistant torque which would have negative repressions on operation stability and structural integrity of the aerogenerator 1. With reference to figure 7, when the speed V reaches a Vsafety safety value, which is lower than the Vrated nominal value, block 109 disconnects block 111 from block 101 and makes block 113 intervene to define the set-point Tref input into block 101. In the speed interval V comprised between the Vsafety and Vrated values, the rotation speed ω is maintained at a ωsafety constant value, corresponding to the rotation speed which occurs when the operating fluid speed V reaches the Vsafety value.

In other words, block 109 sets ωref = ωsafety: the power P continues to increase (fig. 6) in all cases, because the aerodynamic torque T continues to grow as the speed V increases to the Vrated nominal value.

It is worth noting as shown in figures 6 and 7 that the management of the operating transition between Region II and Region III considerably reduces the rotation speed variation rate (angular acceleration) of the impeller 17, with respect to the case shown by the dashed line according to which no management of the transition is carried out.

In Region III, the rotation speed ω can no longer be kept constant in order to maintain the power constant to the nominal power Pn. Therefore, block 109 reduces the set-point ωref under the ωsafety value, so as to compensate for the increase of the aerodynamic torque, which naturally tends to increase as the operating fluid speed V increases:

$$\omega ref= Pn \ / \ Tw$$

Block 113 comprises a feedback adjustment branch of the proportional-integral type (PI) which carries out an adjustment as a function of the reject between set-point ωref and the value ωf, and according to a dynamic model which correlates the rotation speed ω to the resistant torque supplied by the generator 3 (as a function of moments of inertia, configuration of the generator etc.).

Furthermore, block 113 comprises a forward compensation branch of the aerodynamic torque which exploits the Tw value, to improve the adjustment performance. Indeed, by virtue of this compensation, the adjustment branch is totally dedicated to tracking the set-point ωref, without needing to manage possible interferences. Furthermore, the forward compensation linearizes the control system (the aerodynamic torque expression contains non-linearities).

Therefore, two cascading adjusters are implemented in this management strategy for Region III: one related to the rotation speed ω, in block 113 (the output of which is the set-point Tref), and one related to the resistant torque, in block 101 (which, by means of the power electronics, i.e. the converter 4, manages the actual supply of current by the generator 3).

Summarizing the above, block 109 as supervisor has the purpose of activating/deactivating the various operating blocks as a function of the operating point of the turbine, in particular to actuate the following steps:

- torque adjustment to maximize mechanical power for operating fluid speeds V comprised between Vcut-in and Vsafety;
- cascading speed/torque adjustment at constant rotation speed for speeds V comprised between Vsafety and Vrated, so as to manage the transition from Region II to Region III;
- cascading speed/torque control at constant power for speeds V comprised between Vrated and Vcut-out.

For calculating the operating fluid speed estimate (Vw), according to an aspect of the present invention, block 107 uses an iterative method which consists in determining the tip speed ratio λ factor value starting from the aerodynamic estimate (Tw) and starting from a map stored in form of curve or table, which represents the power coefficient values Cp as a function of the λ factor for the turbine in use (as mentioned above, these data are obtained, for example, from aerodynamic simulations and/or experimentations carried out during the step of designing of the turbine).

The iterative expression which allows to identify the actual value of the λ factor in a given instant of time t is:

$$\lambda_{k+1} = \lambda_k - \gamma \ \Delta Tw$$

$$\text{i.e.} \ \Delta\lambda_k = - \gamma \ \Delta Tw$$

where $\gamma$ is a positive constant value chosen by the designer, and $\Delta Tw$ is the deviation between the Tw value estimated by the aerodynamic torque (supplied by block 105) and the aerodynamic torque value, which is obtained by means of calculation starting from value $\lambda_k$. Explicating the expression $\Delta Tw(t)$:

$$\lambda_{k+1} = \lambda_k - \gamma \ (Tw - (\rho \ \pi R^2 \ Cp(\lambda_k) \ V^3 \ / \ (2 \ \omega))) =$$

$$= \lambda_k - \gamma \ (Tw - (\rho \ \pi R^5 \ Cp(\lambda_k) \ \omega^2 \ / \ (2 \ \lambda_k^3)))$$

In other words, the corresponding power coefficient value $Cp(\lambda_k)$ is calculated according to the aforesaid map after having assumed a first attempt value for $\lambda_k$. The attempt value $\lambda_{k+1}$, which is reused as second value to repeat the calculation, is calculated by means of the ratio indicated above.

For example, the λopt value may be adopted as first attempt value. The calculation must be iterated N times to obtain the estimate of the actual value λ in instant t. The higher the number of iterations N, the higher the approximation of the estimate with respect to the actual value of λ. In other words, the iteration makes the calculation converge towards a value of λ, which, when used to calculate the aerodynamic torque, provides the same value estimated by block 105.

Furthermore, the speed estimate will be the more accurate, the more accurate is the map of the power coefficient $Cp(\lambda)$.

In the case described above, the algorithm which estimates the operating fluid speed only operates when the impeller 17 is turning. Indeed, in the concept of mechanical blocking which is implemented in Regions I and IV cannot be introduced into the Luenberger observer model. Furthermore, the ωm value is measured by a rotation sensor applied to the impeller 17. Thus, when the aerogenerator 1 works in Regions I and IV, the Tw value on the aerodynamic torque is not available, which value is needed by the algorithm instead to calculate and provide the operating fluid speed estimate.

However, block 109 needs to receive information on such a speed also in Regions I and IV, to have a basic reference according to which to control the release of the impeller 17 and thus to enter Region II when the speed V exceeds the Vcut-in threshold value and enters Region III when the speed V drops under the Vcut-out minimum limit. In order to reach such a purpose, it is necessary to add at least one trigger device which operates as a function of the operating fluid speed and sends an enable signal and/or an inhibit signal to block 109 when the speed V exceeds the Vcut-in threshold value and the Vcut-out maximum limit in either sense.

For example, such a trigger could be defined by electromagnetic switches of the feathered type which move when the operating fluid speed exceeds the Vcut-in and Vcut-out values.

Alternatively, a position sensor or angular sensor (e.g. of the inductive, Hall effect, on-off type etc.) may be provided so as to determine whether the assembly 20 is inclined by a given angle with respect to the operating position to provide the enable signal which allows to pass from Region IV to Region III.

The advantages of the present invention are apparent from the description above.

Firstly, the protection system 28 is associated to an active type control so that the thrust of the impeller 17 causes the rotation about axis 21 of the pivoting assembly 20 as the operating fluid speed V increases, so as to reduce or even cancel out the operating fluid flow which axially invests the impeller 17, in case of an excessively intensive operating fluid flow.

At the same time, the sophisticated control architecture of the system 29 also allows to safeguard the aerogenerator 1 and allows to operate in optimal manner at various operating fluid speeds without using variable pitch blades and without mechanical devices to adjust the rotation speed because intervention is only on the resistant torque exerted by the stator 30 of the generator 3.

The presence of the pivoting assembly 20 and the capacity of the control system 29 to manage the operation in Region III provide a protection redundancy and consequently the aerogenerator 1 is extremely reliable. In particular, the protection system 28 intervenes in an intermediate operating point of Region III to allow the assembly 20 to pivot (in other words, the protection system 28 is calibrated so as to start the rotation of the assembly 20 about axis 21 when the operating fluid speed V reaches a threshold which is intermediate between the Vrated and Vcut-out values). Thus, Region II remains ideally divided into two operating ranges, the first governed only by the control system 29, and the second governed by both the control system 29 and the protection system 28. By virtue of this division, it is not necessary to overdimension the generator 3, because the latter does not need to manage the entire power in the second range of Region III (indeed, at least one part of the available power of the operating fluid is already limited by the rotation of the assembly 20).

The control system 29 requires the use of an electric machine capable of developing a resistant torque which may be adjusted, as the generator 3 of the type described above, but it is a valid and reliable alternative to avoid the systems of the known type which tend to limit the power in Region III exclusively.

The control system 29 allows to exploit a wider range of operating fluid speeds with respect to that applied in other aerogenerators of known type.

The aerodynamic torque (Tw) estimated by the state observer avoids the use of dedicated measuring sensors and allows to adjust the rotation speed $\omega$ effectively and to manage the transaction from Region II to Region III so as to limit stresses.

Furthermore, the operating fluid speed estimate (Vw), in addition to being important for activating/deactivating the various adjustment blocks, allows to eliminate the use of anemometers. With respect to other estimation methods of known type, the iterative procedure described above has less stringent requirements to obtain the estimated value Vw.

From the constructive point of view, the assembly 20 is extremely compact and for this reason the areogenerator 1 may be used in applications other than wind generation plants. For example, a possible application in the aeronautic field could be that of a turbine commonly named RAT (Ram Air Turbine): this is a small turbine installed on aircraft and used as source of auxiliary energy; it generates energy by virtue of the air flow which strikes it consequent to the speed of the aircraft.

Another possible applicable could be that of an energy recovery turbine in an exhaust gas flow, in which case the operating fluid is defined by exhaust gases instead of air.

Finally, from the above, it is apparent that changes and variations can be made to the described aerogenerator 1 and to the control method described with reference to the accompanying figures without departing from the scope of protection of the present invention, as disclosed in the appended claims.

In particular, the active type control system 29 may be implemented also in case of adjustable pitch blade turbines and/or the rotor of the generator 3 could be connected by means of a shaft to the impeller 17.

The operating fluid speed could be estimated by means of a different calculation procedure or by means of traditional sensors even if the latter are not particularly advantageous.

**Claims**

1. An aerogenerator (1) comprising:

   - a turbine (2) comprising an impeller (17) that is rotatable about a rotation axis (18) under the thrust of an operating fluid;
   - a generator (3) comprising a rotor (31) driven in rotation by said impeller (17);
   - at least one static converter (4) electrically connected to said generator (3);
   - adjusting means for adjusting the operation of the aerogenerator (1) in response to variations in the operating fluid flow;

   said generator (3) being coaxial to said impeller (17); said turbine (2) comprising a structure (11) defining a pipe (15) and supporting an assembly (20), which is defined by a stator (30), the whole of said impeller (17) and said generator (3), **characterized in that** said assembly (20) is rotatable with respect to said structure (11) about an adjustment axis (21) by means of hinge devices (22) mounted on the walls (14) of the pipe (15), the impeller (17) defining a circular front surface (23) and being housed inside the pipe (15); protection means (28) being provided to let automatically rotate said assembly (20) about said adjustment axis (21) when the intensity of the operating fluid exceeds a certain limit; wherein said protection means (28) comprise an arrangement of said adjustment axis (21) in a tangential direction with respect to said rotation axis (18) and in a position radially spaced from said rotation axis (18).

2. The aerogenerator according to claim 1, **characterized in that** said protection means (28) comprise elastic means (26) exerting a contrast torque opposed to the torque exerted, in use, by the operating fluid about said adjustment axis.

3. The aerogenerator according to any of the preceding claims, **characterized in that** said rotor (31) surrounds said impeller (17) and is coupled to the radial outer ends of the blades of said impeller (17).

4. The aerogenerator according to claim 1, **characterized in that** said adjustment means comprise:

   - determining means (107) for determining a value (Vw) indicative of the speed of the operating fluid;
   - electronic control means (6) configured so as to control said static converter (4) as a function of the value (Vw); and
   - said static converter (4), which is configured so as to pilot said generator (3) for adjusting the electric current supplied by the generator (3), in response to commands emitted by said electronic control means (6).

5. The aerogenerator according to claim 4, **characterized in that** said determining means (107) are defined by calculation means configured to estimate said value (Vw) as a function of inputs ($\omega$f,Tw) indicative respectively of the rotation speed and of the aerodynamic torque of said impeller (17).

6. A control method for controlling an aerogenerator made according to claim 4 or 5, the method being **characterized by** comprising the steps of:

   - determining a value (Vw) indicative of the speed of the operating fluid;
   - calculating a set-point (Tref) as a function of said value (Vw), said set-point (Tref) defining a desired resistant torque on said impeller (17) or a desired electric current, and
   - driving said generator (3) so as to adjust the electric current supplied by the generator (3) to follow said set-point (Tref).

7. The method according to claim 6, **characterized by**:

   - comparing said value (Vw) with a plurality of stored threshold values (Vcut-in, Vsafety, Vrated, Vcut-out);
   - selecting an adjustment block between at least two available adjustment blocks (111,113) in response to the comparison outcome.

8. The method according to claim 7, **characterized in that**, when said value (Vw) is greater than a nominal value (Vrated), said set-point (Tref) is calculated so as to reduce the rotation speed of the impeller (17) with the increasing in speed of the operating fluid, while maintaining the power constant.

9. The method according to claim 8, **characterized in that**, when said value (Vw) is comprised between a safety value (Vsafety) and said nominal value (Vrated), said set-point (Tref) is calculated so as to maintain constant the rotation speed of the impeller.

10. The method according to any of the claims 7 to 9, **characterized by** calculating a set-point speed ($\omega$ref) defining a desired rotation speed of the impeller (17), and calculating said set-point (Tref) by means of a feedback adjustment of the rotation speed and by means of a forward compensation of the torque.

11. The method according to any of the claims 7 to 10, **characterized in that**, when said value (Vw) is less than one of said stored threshold values (Vsafety), said set-point (Tref) is calculated so as to maximize the power coefficient (Cp) of the turbine (2).

12. The method according to any of the claims 6 to 11, **characterized by** estimating the aerodynamic torque of the impeller (17) by way of a state observer (105), as a function of an input ($\omega$m) indicative of the rotation speed of the impeller (17).

13. The method according to any of the claims 6 to 12, **characterized in that** said value (Vw) is estimated as a function of only two inputs ($\omega$f, Tw) respectively indicative of the rotation speed and of the aerodynamic torque of said impeller (17).

14. The method according to claim 13, **characterized in that** said value (Vw) is estimated, at a given time instant, by way of the relation

$$V = \omega R / \lambda$$

where:

$\omega = \omega f$ value indicative of the rotation speed of the impeller at said instant;

R = radius of the impeller;

$\lambda$ = factor which is determined with a series of subsequent iterations by way of the following relation:

$$\lambda_{k+1} = = \lambda_k - \gamma (Tw - (\rho \Pi R^5 Cp(\lambda_k) \omega^2 / (2 \lambda_k^3)))$$

where:

$\gamma$ = numerical constant;

Tw = value indicative of the aerodynamic torque of the impeller at said instant;

$\rho$ = density of the operating fluid;

$Cp(\lambda_K)$ = power coefficient, determined as a function of the value $\lambda_K$ on the basis of a stored map, which represents the values of the power coefficient (Cp) of said turbine as a function of the factor $\lambda$.

**Patentansprüche**

1. Windgenerator (1) der Folgendes aufweist:

   - eine Turbine (2), die ein Laufrad (17) aufweist, das unter der Druckkraft eines Betriebsfluids um eine Rotationsachse (18) drehbar ist;
   - einen Generator (3), der einen Rotor (31) aufweist, der in Drehung von dem Laufrad (17) angetrieben wird;
   - mindestens einen statischen Konverter (4), der elektrisch mit dem Generator (3) verbunden ist;
   - Verstellmittel zum Einstellen des Betriebs des Windgenerators (1) in Reaktion auf Änderungen in dem Betriebsfluidstrom;

   wobei der Generator (3) koaxial zu dem Laufrad (17) ist;
   wobei die Turbine (2) einen Aufbau (11) aufweist, der ein Rohr (15) definiert und eine Anordnung (20) stützt, die von einem Stator (30), dem gesamten Laufrad (17) und dem Generator (3) definiert wird, **dadurch gekennzeichnet, dass** die Anordnung (20) bezüglich dem Aufbau (11) um eine Verstellachse (21), mittels Gelenkvorrichtungen (22), die an den Wänden (14) des Rohrs (15) befestigt sind, drehbar ist und das Laufrad (17) eine kreisförmige Vorderfläche (23) definiert und in dem Rohr (15) aufgenommen ist;
   ein Schutzmittel (28), das vorgesehen ist, um zu gestatten, dass sich die Anordnung (20) automatisch um die Verstellachse (21) drehen kann, wenn die Kraft des Betriebsfluids einen bestimmten Schwellenwert überschreitet;
   wobei das Schutzmittel (28) eine Anordnung der Verstellachse (21) in einer tangentialen Richtung bezüglich der Drehachse (18) und in einer Position, die von der Rotationsachse (18) beabstandet ist, aufweist.

2. Windgenerator nach Anspruch 1, **dadurch gekennzeichnet, dass** das Schutzmittel (28) elastische Elemente (26) aufweist, die ein entgegengesetztes Drehmoment zu dem Drehmoment, das in Verwendung von dem Betriebsfluid um die Verstellachse ausgeübt wird, ausübt.

3. Windgenerator nach einem der vorhergehenden Ansprüche, **dadurch gekennzeichnet, dass** der Rotor (31) das Laufrad (17) umgibt und mit den radialen äußeren Enden der Blätter des Laufrads (17) gekoppelt ist.

4. Windgenerator nach Anspruch 1, **dadurch gekennzeichnet, dass** die Verstellmittel Folgendes aufweisen:

   - Bestimmungsmittel (107) zum Bestimmen eines Wertes (Vw), der die Geschwindigkeit des Betriebsfluids angibt;
   - elektronische Steuermittel (6), die derart ausgelegt sind, den statischen Konverter (4) als eine Funktion des Wertes (Vw) zu steuern; und
   - den statischen Konverter (4), der derart ausgelegt ist, den Generator (3) zum Einstellen des elektrischen Stroms, der von dem Generator (3) geliefert wird, in Reaktion auf Befehle, die von den elektronischen Steuermitteln (6) ausgegeben werden, zu steuern.

5. Windgenerator nach Anspruch 4, **dadurch gekennzeichnet, dass** die Verstellmittel (107) von Berechnungsmitteln definiert werden, die dazu ausgelegt sind, den Wert (Vw) als eine Funktion von Eingaben ($\omega f$, Tw), die jeweils die Drehzahl und das aerodynamische Drehmoment des Laufrads (17) angeben, zu schätzen.

6. Steuerverfahren zum Steuern eines Windgenerators, der gemäß Anspruch 4 oder 5 hergestellt ist, wobei das Verfahren **dadurch gekennzeichnet ist, dass** es die folgenden Schritte aufweist:

   - Bestimmen eines Wertes (Vw), der die Geschwindigkeit des Betriebsfluids angibt;
   - Berechnen eines Sollwerts (Tref) als eine Funktion des Wertes (Vw), wobei der Sollwert (Tref) ein gewünschtes Gegenmoment auf dem Laufrad (17) oder einen gewünschten elektrischen Strom definiert; und
   - Antreiben des Generators (3), um den elektrischen Strom, der von dem Generator (3) geliefert wird, derart einzustellen, dass der Sollwert (Tref) erfüllt wird.

7. Verfahren nach Anspruch 6, **gekennzeichnet durch**:

   - Vergleichen des Wertes (Vw) mit mehreren gespeicherten Schwellenwerten (Vcut-in, Vsafety, Vrated, Vcut-out);
   - Auswählen eines Verstellblocks aus mindestens zwei verfügbaren Verstellblöcken (111, 113) in Reaktion auf das Vergleichsergebnis.

8. Verfahren nach Anspruch 7, **dadurch gekennzeichnet, dass** wenn der Wert (Vw) größer als ein Nennwert(Vrated) ist, der Sollwert (Tref) derart berechnet wird, die Drehzahl des Laufrads (17) mit zunehmender Geschwindigkeit des Betriebsfluids zu reduzieren, während eine konstante Leistung beibehalten wird.

9. Verfahren nach Anspruch 8, **dadurch gekennzeichnet, dass** wenn der Wert (Vw) aus einem Sicherheitswert (Vsafety) und dem Nennwert (Vrated) erhalten ist, der Sollwert (Tref) derart berechnet wird, die Drehzahl des Laufrads konstant zu halten.

10. Verfahren nach einem der Ansprüche 7 bis 9, **gekennzeichnet durch** Berechnen einer Sollgeschwindigkeit ($\omega$ref), die eine gewünschte Drehzahl des Laufrads (17) definiert, und Berechnen des Sollwerts (Tref) mittels Rücklaufanpassung der Drehzahl und mittels einer Vorwärtskompensation des Drehmoments.

11. Verfahren nach einem der Ansprüche 7 bis 10, **dadurch gekennzeichnet, dass** wenn der Wert (Vw) unter einem der gespeicherten Schwellenwerte (Vsafety) liegt, der Sollwert (Tref) derart berechnet wird, den Leistungskoeffizienten (Cp) der Turbine (2) zu maximieren.

12. Verfahren nach einem der Ansprüche 6 bis 11, **gekennzeichnet durch** Schätzen des aerodynamischen Drehmoments des Laufrads (17) mittels eines Zustandsbeobachters (105) als eine Funktion einer Eingabe ($\omega$m), die die Drehzahl des Laufrads (17) angibt.

13. Verfahren nach einem der Ansprüche 6 bis 12, **dadurch gekennzeichnet, dass** der Wert (Vw) als eine Funktion von nur zwei Eingaben ($\omega f$, Tw), die jeweils die Drehzahl und das aerodynamische Drehmoment des Laufrads (17) angeben, geschätzt wird.

14. Verfahren nach Anspruch 13, **dadurch gekennzeichnet, dass** der Wert (Vw) zu einem gegebenen Zeitpunkt geschätzt wird, mittels der Gleichung

$$V = \omega R / \lambda$$

wobei:

   $\omega = \omega f$ Wert, der die Drehzahl des Laufrads zu dem Zeitpunkt angibt;
   R = Radius des Laufrads;

λ = Faktor, der durch eine Reihe von nachfolgenden Wiederholungen mittels der folgenden Gleichung bestimmt wird:

$$\lambda_{k+1} = = \lambda_k - \gamma \, (Tw - (\rho \, \pi R^5 \, Cp(\lambda_k) \, \omega 2 \, / \, (2\lambda_k{}^3)))$$

wobei:

$\gamma$ = numerische Konstante;
Tw = Wert, der das aerodynamische Drehmoment des Laufrads zu dem Zeitpunkt angibt;
$\rho$ = Dichte des Betriebsfluids;
$Cp(\lambda_k)$ = Leistungskoeffizient, der als eine Funktion des Wertes $\lambda_k$ auf der Basis eines gespeicherten Kennfelds, das die Werte des Leistungskoeffizienten (Cp) der Turbine als eine Funktion des Faktors λ darstellt, bestimmt wird.

## Revendications

1.  Aérogénérateur (1) comprenant :

    - une turbine (2) comprenant une hélice (17) qui est rotative autour d'un axe de rotation (18) sous la poussée d'un fluide opérationnel ;
    - un générateur (3) comprenant un rotor (31) entraîné en rotation par ladite hélice (17) ;
    - au moins un convertisseur statique (4) connecté électriquement audit générateur (3) ;
    - des moyens de réglage pour régler le fonctionnement de l'aérogénérateur (1) en réponse aux variations dans l'écoulement de fluide opérationnel ;

    ledit générateur (3) étant coaxial par rapport à ladite hélice (17) ;
    ladite turbine (2) comprenant une structure (11) définissant un tuyau (15) et supportant un ensemble (20), qui est défini par un stator (30), l'ensemble de ladite hélice (17) et dudit générateur (3), **caractérisé en ce que** ledit ensemble (20) est rotatif par rapport à ladite structure (11) autour d'un axe de réglage (21) au moyen de dispositifs d'articulation (22) montés sur les parois (14) du tuyau (15), l'hélice (17) définissant une surface avant circulaire (23) et étant logée à l'intérieur du tuyau (15) ;
    des moyens de protection (28) étant prévus pour laisser tourner automatiquement ledit ensemble (20) autour dudit axe de réglage (21) lorsque l'intensité du fluide opérationnel dépasse une certaine limite ;
    dans lequel lesdits moyens de protection (28) comprennent un agencement dudit axe de réglage (21) dans une direction tangentielle par rapport audit axe de rotation (18) et dans une position radialement espacée dudit axe de rotation (18).

2.  Aérogénérateur selon la revendication 1, **caractérisé en ce que** lesdits moyens de protection (28) comprennent des moyens électriques (26) exerçant un couple de contraste opposé au couple exercé, lors de l'utilisation, par le fluide opérationnel autour dudit axe de réglage.

3.  Aérogénérateur selon l'une quelconque des revendications précédentes, **caractérisé en ce que** ledit rotor (31) entoure ladite hélice (17) et est couplé aux extrémités externes radiales des pales de ladite hélice (17) .

4.  Aérogénérateur selon la revendication 1, **caractérisé en ce que** lesdits moyens de réglage comprennent :

    - des moyens de détermination (107) pour déterminer une valeur (Vw) indiquant la vitesse du fluide opérationnel ;
    - des moyens de commande électroniques (6) configurés de sorte à commander ledit convertisseur statique (4) en fonction de la valeur (Vw) ; et
    - ledit convertisseur statique (4), qui est configuré de sorte à piloter ledit générateur (3) pour régler le courant électrique fourni par le générateur (3), en réponse aux commandes émises par lesdits moyens de commande électroniques (6).

5.  Aérogénérateur selon la revendication 4, **caractérisé en ce que** lesdits moyens de détermination (107) sont définis par des moyens de calcul configurés pour estimer ladite valeur (Vw) en fonction d'entrées ($\omega f$, Tw) indiquant res-

pectivement la vitesse de rotation et le couple aérodynamique de ladite hélice (17) .

6. Procédé de commande pour commander un aérogénérateur réalisé selon la revendication 4 ou 5, le procédé étant **caractérisé en ce qu'**il comprend les étapes suivantes :

- la détermination d'une valeur (Vw) indiquant la vitesse du fluide opérationnel ;
- le calcul d'un point de consigne (Tref) en fonction de ladite valeur (Vw), ledit point de consigne (Tref) définissant un couple résistant souhaité sur ladite hélice (17) ou un courant électrique souhaité, et
- l'entraînement dudit générateur (3) de sorte à régler le courant électrique fourni par le générateur (3) pour suivre ledit point de consigne (Tref).

7. Procédé selon la revendication 6, **caractérisé par** :

- la comparaison de ladite valeur (Vw) avec une pluralité de valeurs de seuil stockées (Vcut-in, Vsafety, Vrated, Vcut-out) ;
- la sélection d'un bloc de réglage entre au moins deux blocs de réglage (111, 113) disponibles en réponse au résultat de comparaison.

8. Procédé selon la revendication 7, **caractérisé en ce que**, lorsque ladite valeur (Vw) est supérieure à une valeur nominale (Vrated), ledit point de consigne (Tref) est calculé de sorte à réduire la vitesse de rotation de l'hélice (17) avec l'augmentation de vitesse du fluide opérationnel, tout en maintenant la constante de puissance.

9. Procédé selon la revendication 8, **caractérisé en ce que**, lorsque ladite valeur (Vw) est comprise entre une valeur de sécurité (Vsafety) et ladite valeur nominale (Vrated), ledit point de consigne (Tref) est calculé de sorte à maintenir constante la vitesse de rotation de l'hélice.

10. Procédé selon l'une quelconque des revendications 7 à 9, **caractérisé par** le calcul d'une vitesse au point de consigne ($\omega$ref) définissant une vitesse de rotation souhaitée de l'hélice (17), et le calcul dudit point de consigne (Tref) au moyen d'un réglage en rétroaction de la vitesse de rotation et au moyen d'une précompensation du couple.

11. Procédé selon l'une quelconque des revendications 7 à 10, **caractérisé en ce que**, lorsque ladite valeur (Vw) est inférieure à l'une desdites valeurs de seuil stockées (Vsafety), ledit point de consigne (Tref) est calculé de sorte à maximiser le coefficient de puissance (Cp) de la turbine (2).

12. Procédé selon l'une quelconque des revendications 6 à 11, **caractérisé par** l'estimation du couple aérodynamique de l'hélice (17) au moyen d'un observateur d'état (105), en fonction d'une entrée ($\omega$m) indiquant la vitesse de rotation de l'hélice (17).

13. Procédé selon l'une quelconque des revendications 6 à 12, **caractérisé en ce que** ladite valeur (Vw) est estimée en fonction de deux entrées uniquement ($\omega$f, Tw) indiquant respectivement la vitesse de rotation et le couple aérodynamique de ladite hélice (17) .

14. Procédé selon la revendication 13, **caractérisé en ce que** ladite valeur (Vw) est estimée, à un instant donné, au moyen de la relation

$$V = \omega R / \lambda$$

où :

$\omega$ = $\omega$f valeur indiquant la vitesse de rotation d'hélice audit instant ;
R = rayon de l'hélice ;
$\lambda$ = facteur qui est déterminé avec une série d'itérations ultérieures au moyen de la relation suivante :

$$\lambda_{k+1} == \lambda_k - \gamma (Tw - (\rho \pi R^5 Cp(\lambda_k) \omega^2 / (2 \lambda_k^3)))$$

où :

$\gamma$ = constante numérique ;

Tw = valeur indiquant le couple aérodynamique de l'hélice audit instant ;

$\rho$ = densité du fluide opérationnel ;

$Cp(\lambda_K)$ = coefficient de puissance, déterminé comme une fonction de la valeur $\lambda_K$ sur la base d'une carte stockée, qui représente les valeurs du coefficient de puissance (Cp) de ladite turbine en fonction du facteur $\lambda$.

# FIG. 1

# FIG. 2

## FIG. 3

## FIG. 4

# FIG. 5

# FIG. 6

# FIG. 7

# FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- FR 948645
- US 4183717 A
- EP 2400150 A2
- WO 2009093181 A
- WO 2009093183 A